# EUROPÄISCHE PATENTANMELDUNG

(11) **EP 4 119 264 A1**
(43) Veröffentlichungstag der Anmeldung: **18.01.2023**
(21) Anmeldenummer: 21186163.8
(22) Anmeldetag: 16.07.2021
(51) Int. Cl.: B22F 5/08, B22F 10/28, B33Y 80/00, F16B 33/02

(54) **GEWINDEELEMENT UMFASSEND ODER BESTEHEND AUS EINEM METALL MIT EINEM INNENGEWINDE**

(71) Anmelder: Heraeus Amloy Technologies GmbH, 63450 Hanau (DE)
(72) Erfinder: KILIC, Beytullah Yasin, 63791 Karlstein (DE); ROSENBERG, Ronald Allan, 63791 Karlstein (DE); WACHTER, Hans Jürgen, 63791 Karlstein (DE); BIEN, Elena, 63791 Karlstein (DE); GLÄSER, Tim, 63791 Karlstein (DE)
(74) Vertreter: Glas, Holger

(57) **Zusammenfassung**

Die vorliegende Erfindung betrifft ein Gewindeelement umfassend oder bestehend aus einem Metall mit einem Innengewinde, das durch additive Fertigung hergestellt ist, und ein Verfahren zur Herstellung eines Gewindeelements umfassend oder bestehend aus einem Metall mit einem Innengewinde.

Das Gewindeelement umfasst einen Körper, eine Öffnung, die eine Innenwand des Körpers definiert, und einen Gewindeabschnitt mit einem Gewinde. Der Körper umfasst ein erstes Ende und ein zweites Ende. Die Öffnung erstreckt sich zumindest teilweise von dem ersten Ende in Richtung des zweiten Endes des Körpers. Der Gewindeabschnitt ist an der Innenwand der Öffnung geformt und die Innenwand weist zumindest eine Aussparung auf, die den Gewindeabschnitt durchkreuzt. Eine Oberfläche des Gewindeabschnitts weist eine Rauigkeit R_{z} im Bereich von 5-50 µm, insbesondere 10 - 25 µm auf.

## Beschreibung

### Technisches Gebiet

Die vorliegende Erfindung betrifft ein Gewindeelement umfassend oder bestehend aus einem Metall mit einem Innengewinde, das mittels eines additiven Fertigungsverfahrens hergestellt ist, und ein Verfahren zur Herstellung eines Gewindeelements umfassend oder bestehend aus einem Metall mit einem Innengewinde.

### Hintergrund der Erfindung

Von amorphen Metallen spricht man, wenn Metalllegierungen auf atomarer Ebene keine kristalline, sondern eine amorphe Struktur aufweisen. Üblicherweise wird eine solche ungeordnete Struktur durch schnelles Abkühlen einer Schmelze erreicht. "Schnelles Abkühlen" bedeutet, dass sich die Atome oder Moleküle beim Abkühlen nicht mehr regelmäßig anordnen können.

Die amorphen Metalllegierungen und/oder Edelmetallen zeigen ausgezeichnete mechanische Eigenschaften, wie z.B. hohe Korrosionsbeständigkeit, isotrope Eigenschaften, hohe magnetische Durchlässigkeit und Biokompatibilität. Daher sind die amorphen Legierungen und/oder Edelmetalle für Hightech-Anwendungen gut geeignet.

Im Allgemeinen wird ein Innengewinde eines Bauteils durch zerspanendes Gewindeschneiden erzeugt, z.B. durch Schneiden oder Fräsen. Das Bauteil, das amorphe Legierungen umfasst, lässt sich jedoch aufgrund seiner Härte nicht leicht zerspanen, was zu einer Ungenauigkeit des hergestellten Innengewindes und/oder einem technischen Aufwand führen kann. Daher ist eine Herstellung des Bauteils aus amorphen Legierungen mit einer komplexen Innstruktur mittels eines herkömmlichen Verfahrens sehr aufwendig. Der Einsatz von additiven Fertigungsverfahren für Bauteile aus Edelmetallen hat den Vorteil, dass teure Abfälle, die beim zerspanenden Gewindeschneiden entstehen, vermieden werden können.

### Zusammenfassung der Erfindung

Es ist daher eine Aufgabe der vorliegenden Erfindung, ein verbessertes Gewindeelement mit einem Innengewinde bereitzustellen, das durch ein vereinfachtes Verfahren hergestellt werden kann.

Diese Aufgabe wird durch das Gewindeelement umfassend oder bestehend aus einem Metall mit einem Innengewinde, das mittels eines additiven Fertigungsverfahrens hergestellt ist, und das Verfahren zur Herstellung eines Gewindeelements umfassend oder bestehend aus einem Metall mit einem Innengewinde nach den unabhängigen Ansprüchen gelöst. Vorteilhafte Ausführungsformen und Weiterbildungen sind den Unteransprüchen und der nachfolgenden Beschreibung zu entnehmen.

Die vorliegende Erfindung umfasst ein Gewindeelement umfassend oder bestehend aus einem Metall mit einem Innengewinde, das mittels eines additiven Fertigungsverfahrens hergestellt ist. Das Gewindeelement umfasst einen Körper, eine Öffnung, die eine Innenwand des Körpers definiert, und einen Gewindeabschnitt mit einem Gewinde. Der Körper umfasst ein erstes Ende und ein zweites Ende. Die Öffnung erstreckt sich zumindest teilweise von dem ersten Ende in Richtung des zweiten Endes des Körpers. Der Gewindeabschnitt ist an der Innenwand der Öffnung geformt und die Innenwand weist zumindest eine Aussparung auf, die den Gewindeabschnitt durchkreuzt. Eine Oberfläche des Gewindeabschnitts weist eine Rauigkeit R_{z} im Bereich von 2,5 - 60 µm, insbesondere 10 - 25 µm auf.

Der Vorteil der vorliegenden Erfindung liegt darin, dass ein Gewinde, insbesondere ein selbstfurchendes Innengewinde eines Werkstücks, wie beispielsweise eines Gewindeelements aus amorphen Legierungen und/oder Edelmetallen ohne großen Aufwand hergestellt werden kann. Im additiven Fertigungsverfahren kann ein Pulvermaterial aus Metall, beispielsweise amorphen Legierungen und/oder Edelmetallen schichtweise aufgetragen und selektiv geschmolzen werden, sodass eine vordefinierte Dimension und/oder Struktur des zu erzeugenden Innengewindes und/oder Gewindeelements problemlos realisiert werden kann. Auf diese Weise kann ein Gewindeelement aus Metall, beispielsweise amorphen Legierungen und/oder Edelmetallen mit einem funktionsfähigen Innengewinde energiegünstig und kostengünstig hergestellt werden. Ein weiterer Vorteil des erfindungsgemäßen Gewindeelements ist fehlende Nachbearbeitung des erzeugten Gewindeelements.

Additive Fertigung ist ein breit gefasster Sammelbegriff, der eine Vielzahl verschiedener Fertigungstechniken umfasst. Ihnen allen ist gemein, dass sie durch schichtweises Verfestigen von Material, die Herstellung von nahezu beliebig komplexen Werkstücken ermöglichen.
Das additive Fertigungsverfahren kann aus der Gruppe bestehend aus, selektivem Laserschmelzen (SLM), selektivem Elektronenstrahlschmelzen (SEBM), Laserauftragschweißen (LMD) und selektivem Lasersintern (SLS) ausgewählt sein.

Das Gewindeelement kann ein metallisches Material umfassen oder aus diesem bestehen. Mit anderen Worten, das metallische Pulvermaterial wird mittels des additiven Fertigungsverfahrens schichtweise aufgetragen und selektiv geschmolzen, um das Gewindeelement mit einem Innengewinde herzustellen.

Die Form des Köpers kann nicht auf eine bestimmte Gestaltung eingeschränkt sein. Der Körper kann beispielsweise eine komplexe Kontur aufweisen, die sich für einen Einsatz in der Medizintechnik, Feinmechanik und/oder Luft- und Raumfahrt geeignet sein kann. Der Körper des Gewindeelements kann beispielsweise zylindrisch, blockförmig oder ringförmig ausgebildet sein.

Der Körper kann eine Öffnung aufweisen, die sich zumindest teilweise von einem Ende des Körpers in eine Mitte des Körpers erstreckt. Die Öffnung kann entlang einer Längsachse des Körpers oder senkrecht oder schräg relativ zur Längsachse des Körpers ausgebildet sein. Die Öffnung kann sich entweder nur bis zu einer vorbestimmten Tiefe des Körpers oder durchgehend von dem ersten Ende bis zum zweiten Ende des Körpers erstrecken, um eine Durchgangsöffnung zu formen. Die Öffnung kann einen kreisförmigen, quadratischen, rechteckigen, elliptischen oder polygonalen Querschnitt aufweisen.

Durch die Öffnung, die im Inneren des Körpers angeordnet ist, kann der Körper eine Innenwand aufweisen. Der Querschnitt der Innenwand kann somit gleich wie der Querschnitt der Öffnung sein. An der Innenwand des Körpers oder der Öffnung kann der Gewindeabschnitt mit einer Vielzahl von Gewindegängen ausgebildet sein.

Im Gegensatz zu einem zerspanenden Gewindeschneiden, bei dem die Öffnung und der Gewindeabschnitt an einem bestehenden Körper erzeugt werden, können der Körper, die Öffnung und der Gewindeabschnitt des erfindungsgemäßen Gewindeelements mittels des additiven Fertigungsverfahrens in einem Schritt hergestellt werden. Mit anderen Worten, das metallische Pulvermaterial kann beispielsweise mittels eines Elektronenstrahls oder Laserstrahls selektiv geschmolzen werden, um den Körper und den Gewindeabschnitt des Gewindeelements zu erzeugen. Dort, wo kein Strahl das Pulvermaterial belichtet, kann somit eine Öffnung, eine Aussparung und/oder eine Nut entstehen. Die Aussparung kann mindestens 10%, oder mindestens 25 % oder mindestens 50% des Umfangs der Öffnung ausmachen.

Die mindestens eine Aussparung kann im Wesentlichen entlang der Längsrichtung des Gewindeabschnitts geformt sein. Alternativ oder zusätzlich kann die mindestens eine Aussparung im Wesentlichen in Umfangsrichtung des Gewindeabschnitts geformt sein. Die Aussparung kann dabei gestaltet sein, den Gewindeabschnitt zu schneiden oder zu durchkreuzen. Mit anderen Worten können Gewindegänge des Gewindeabschnitts durch die Aussparung unterbrochen sein. Die Aussparung kann dazu dienen, während des additiven Fertigungsverfahrens erzeugtes überschüssiges Pulvermaterial, das am Gewindegang anhaftet, aufzunehmen, insbesondere dann, wenn eine Schraube in dieses Gewinde eingedreht wird.

Die Aussparung kann einen beliebig geformten, insbesondere dreieckigen, rechteckigen, (halb-) kreisförmigen oder polygonalen Querschnitt haben. Die Aussparung kann eine gleiche Länge wie der Gewindeabschnitt aufweisen oder nur teilweise den Gewindeabschnitt durchkreuzen. Auch die Tiefe der Aussparung ist erfindungsgemäß nicht weiter beschränkt.

In einer Ausführungsform kann sich zwischen der Aussparung und dem Gewinde des Gewindeabschnitts ein Übergangsabschnitt befinden. Der Übergangsabschnitt kann einen Winkel relativ zu der Aussparung aufweisen, wobei der Winkel bevorzugt zwischen 90° und 270° beträgt.

Ferner kann der Gewindeabschnitt durch den Einsatz des additiven Fertigungsverfahrens eine bestimmte Oberflächeneigenschaft des geformten Innengewindes besitzen. Somit kann die Oberfläche des Gewindeabschnitts, insbesondere die Oberfläche der Gewindegänge, die als eine Kontaktfläche mit einem Gegenelement, wie z.B. einer Schraube, dient, eine bestimmte Rauigkeit aufweisen. Die Rauigkeit R_{z} kann einen Mittelwert aus Einzelrautiefen im Rauprofil des Gewindeabschnitts sein, wobei die Rauigkeit gemäß DIN EN ISO 1302:2002-06 gemessen werden kann. Somit kann die Oberfläche des Gewindeabschnitts einen Durchschnitt der Rauigkeit im Bereich von mindestens 2,5 µm, insbesondere mindestens 10 µm auf. Eine Oberfläche des Gewindeabschnitts weist eine Rauigkeit R_{z} im Bereich von höchstens 75 µm insbesondere höchstens 50 µm und besonders bevorzugt von höchstens 25 µm auf.

In einer Ausführungsform beträgt ein Außendurchmesser des Gewindes mindestens 0,5 mm. Der Außendurchmesser des Gewindes des Gewindeabschnitts ist nach oben hin nicht weiter beschränkt. Der Außendurchmesser des Gewindes kann jedoch kleiner als der Durchmesser des Körpers des Gewindeelements sein, um einen Gewindeabschnitt an der Innenwand des Körpers einrichten zu können. Der Außendurchmesser des Gewindes kann beispielsweise 12 mm sein, um eine M12 Schraube aufnehmen zu können.

In einer Ausführungsform ist das Metall ausgewählt aus der Gruppe bestehend aus amorphen Legierungen und/oder Edelmetallen. Besonders bevorzugt sind amorphe Legierungen mit einer Vickers Härte HV5 im Bereich von 300 oder mehr, insbesondere 400 oder mehr. Mit anderen Worten kann das Gewindeelement durch ein selektives Schmelzen eines metallischen Pulvermaterials umfassend oder bestehend aus amorphen Legierungen und/oder Edelmetallen hergestellt werden.

Die amorphen Metalllegierungen zeigen ausgezeichnete mechanische Eigenschaften, eine hohe Korrosionsbeständigkeit, isotrope Eigenschaften, hohe magnetische Durchlässigkeit und eine gute Biokompatibilität. Daher sind die amorphen Legierungen und/oder Edelmetalle für Hightech-Anwendungen gut geeignet. Edelmetalle weisen unter anderem eine hohe Korrosionsbeständigkeit und eine gute Biokompatibilität auf.

Ein Bauteil, das amorphe Legierungen umfasst, lässt sich jedoch aufgrund seiner Härte und seiner hohen elastischen Dehnung nicht leicht zerspanen, was zu einer Ungenauigkeit des hergestellten Innengewindes führen kann. Additive Fertigungsverfahren ermöglichen eine energie- und kostengünstige Herstellung des Gewindeelements mit einem Innengewinde aus einem Metall umfassend oder bestehend aus amorphen Legierungen und/oder Edelmetallen.

Die amorphen Legierungen können im festen Zustand metallischen Bindungscharakter und gleichzeitig mindestens eine nicht-kristalline Phase aufweisen. Die Abwesenheit von kristallinen Phasen kann mittels XRD bestimmt werden. Eine Phase gilt als amorph, wenn keine Peaks im Diffraktogramm zu erkennen sind. In einer besonderen Ausführungsform sind unter amorphen Legierungen auch solche zu verstehen, die mindestens eine nano-kristalline Phase aufweisen. Somit können die amorphen Legierungen als metallische Massivgläser bezeichnet werden. Die amorphe Legierung kann auf unterschiedlichen Elementen basieren. "Basiert" bedeutet in diesem Zusammenhang, dass das jeweils genannte Element, auf das Gewicht der Legierung bezogen, einen größten Anteil darstellt. Bestandteile, die bevorzugt eine Basis einer solchen Legierung stellen, können beispielsweise ausgewählt sein aus:
A. Metallen aus Gruppe IA und IIA des Periodensystems, z.B. Magnesium, Calcium,
B. Metallen aus Gruppe IIIA und IVA, z.B. Aluminium oder Gallium,
C. frühen Übergangsmetallen aus den Gruppen IVB bis VIIIB, wie z.B. Titan, Zirkon, Hafnium, Niob, Tantal, Chrom, Molybdän, Mangan,
D. späten Übergangsmetallen aus den Gruppen VIIIB, IB, IIB, wie z.B. Eisen, Kobalt, Nickel, Kupfer, Palladium, Platin, Gold, Silber, Zink,
E. Seltenerdmetallen, wie z.B. Scandium, Yttrium, Terbium, Lanthan, Cer, Neodym, Gadolinium, und
F. Nichtmetallen, wie z.B. Bor, Kohlenstoff, Phosphor, Silizium, Germanium, Schwefel.

Bevorzugte Kombinationen von Elementen in metallischen Massivgläser sind ausgewählt aus:
- späten Übergangsmetallen und Nichtmetallen, wobei das späte Übergangsmetall die Basis darstellt, beispielsweise Ni-P, Pd-Si, Au-Si-Ge, Pd-Ni-Cu-P, Fe-Cr-Mo-P-C-B,
- frühen und späten Übergangsmetallen, wobei beide Metalle die Basis darstellen können, wie z.B. Zr-Cu, Zr-Ni, Ti-Ni, Zr-Cu-Ni- AI, Zr-Ti-Cu-Ni-Be,
- Metalle aus Gruppe B mit Seltenerdmetallen, wobei das Metall B die Basis darstellt, wie z.B. AI-La, Al-Ce, Al-La-Ni-Co, La-(Al/Ga)-Cu-Ni, und
- Metalle aus Gruppe A mit späten Übergangsmetallen, wobei das Metall A die Basis darstellt, wie z.B. Mg-Cu, Ca-Mg-Zn, Ca-Mg-Cu

Weitere, besonders bevorzugte Beispiele für Legierungen, die metallische Massivgläser formen, sind ausgewählt aus der Gruppe bestehend aus Ni-Nb-Sn, Co-Fe-Ta-B, Ca-Mg-Ag-Cu, C-oFe-B-Si-Nb, Fe-Ga-(Cr,Mo)(P,C,B), Ti-Ni-Cu-Sn, Fe-Co-Ln-B, Co-(Al,Ga)-(P,B,Si), Fe-B-Si-Nb und Ni-(Nb,Ta)-Zr-Ti. Insbesondere kann das metallische Massivglas eine Zr-Cu-AI-Nb-Legierung sein. Bevorzugt weist diese Zr-Cu-AI-Nb-Legierung außer Zirkon zusätzlich 23,5 - 24,5% Gew. % Kupfer, 3,5 - 4,0 Gew.% Aluminium sowie 1,5 - 2,0 Gew.% Niob auf, wobei sich die Gewichtsanteile zu 100 Gew.% ergänzen.

In einer weiteren, besonders bevorzugten Ausführungsform kann die Massivglas-bildenden Legierung die Elemente Zirkon, Titan, Kupfer, Nickel und Aluminium enthalten oder daraus bestehen. Eine weitere, besonders gut geeignete Legierung weist die Zusammensetzung Zr_{52,5}Ti₅Cu_{17,9}Ni_{14,6}Al₁₀ auf, wobei die Indizes mol-% der jeweiligen Elemente in der Legierung angeben.

In einer Ausführungsform umfasst die Aussparung und/oder das Gewinde eine Fase am ersten Ende und/oder zweiten Ende des Körpers. Der Gewindeabschnitt kann zumindest am ersten Ende des Körpers, an dem die Öffnung bereitgestellt ist, eine erste Fase aufweisen. Falls sich die Öffnung innerhalb des Köpers von dem ersten Ende bis zum zweiten Ende des Körpers erstreckt, sodass eine Durchgangsöffnung ausgebildet werden kann, kann der Gewindeabschnitt zusätzlich am zweiten Ende des Körpers eine weitere Fase aufweisen.

Der Begriff Fase kann so verstanden werden, dass eine freie Werkstückkante abgeschrägt wird, sodass eine eckige Kante des Werkstücks entfernt werden kann. Somit kann eine scharfe Kante am ersten Ende und/oder zweiten Ende des Körpers vermieden werden und gleichzeitig kann ein Gegenelement, wie z.B. eine Schraube, das in die Bohrung eingeschraubt wird, leichter eingeführt werden.

In einer Ausführungsform umfasst das Gewinde mehrere Gewindegänge, die einen Flankenwinkel von 10° bis 70° aufweisen. Das Gewinde kann um die Längsachse des Körpers ausgebildet sein. Das Gewinde kann eine Vielzahl von Gewindegängen aufweisen, die sich zumindest teilweise von dem ersten Ende bis zum zweiten Ende des Körpers erstreckt. Unter dem Begriff Flankenwinkel kann ein Winkel zwischen den einander zugewandten Flanken eines Gewindegangs oder der zwei benachbarten Gewindegänge verstanden werden. Der Flankenwinkel des Gewindegangs kann konstant gehalten werden oder entlang Gewindes variieren.

In einer Ausführungsform weist der Gewindeabschnitt relativ zu der Längsachse der Öffnung eine konische Form auf. Der Gewindeabschnitt kann innerhalb des Körpers des Gewindeelements kegelförmig ausgebildet sein. Mit anderen Worten, ein Flankendurchmesser, ein Außendurchmesser und/oder ein Kerndurchmesser des Gewindeabschnitts kann entlang der Längsachse der Öffnung allmählich vergrößert oder verkleinert werden. Als Alternative kann die Höhe der Gewindegänge entlang der Längsachse abnehmen oder zunehmen, ohne den Außendurchmesser des Gewindes des Gewindeabschnitts zu ändern.

In einer Ausführungsform weist die Innenwand des Körpers mehrere Aussparungen auf, die sich zumindest teilweise von dem ersten Ende in Richtung des zweiten Endes der Öffnung erstrecken. Die Aussparungen können sich entlang der Innenwand des Körpers von dem ersten Ende bis zum zweiten Ende der Öffnung erstrecken. Vorzugsweise sind die Aussparungen von der Innenwand in radialer Richtung des Gewindeabschnitts nach außen angeordnet. Die Aussparungen können in Umfangsrichtung der Öffnung von einander beabstandet angeordnet sein. Die Aussparungen können mindestens 10%, oder mindestens 25 % oder mindestens 50% des Umfangs der Öffnung ausmachen. Auf diese Weise können die Aussparungen den Gewindeabschnitt durchkreuzen und einen Verlauf des Gewindeabschnitts unterbrechen. In den Aussparungen kann das überschüssige Metallpulver, das vom additiven Herstellungsverfahren herrührt und am Gewindegang anhaftet, aufgenommen werden.

In einer Ausführungsform ist die Aussparung spiralförmig entlang des Gewindeabschnitts geformt. Die spiralförmige Aussparung kann entlang der Innenwand des Körpers im Wesentlichen in der gleichen Richtung wie das Gewinde des Gewindeabschnitts angeordnet sein. Die spiralförmige Aussparung kann aber auch entlang der Innenwand des Körpers im Wesentlichen in entgegengesetzter Richtung relativ zu dem Gewinde des Gewindeabschnitts angeordnet sein. Die Aussparung kann jedoch keine Gewindegänge umfassen.

Eine Breite der Aussparung kann deutlich größer als eine Steigung des Gewindes sein, welche einem Abstand zwischen den Spitzen der Gewindegänge entspricht. Ferner kann ein Durchmesser der Aussparung deutlich größer als der Außendurchmesser des Gewindes sein, sodass die Aussparung weiter von der Innenwand nach außen in den Körper eindringt als der Gewindeabschnitt. Auf diese Weise kann die Aussparung den Gewindeabschnitt durchkreuzen und einen Verlauf des Gewindeabschnitts unterbrechen. In der Aussparung kann das überschüssige Metallpulver, das vom additiven Herstellungsverfahren herrührt und am Gewindegang anhaftet, aufgenommen werden.

In einer Ausführungsform umfasst die Aussparung ein Gegengewinde, das zumindest teilweise in einer entgegensetzten Richtung relativ zum Gewinde des Gewindeabschnitts geformt ist. Mit anderen Worten, die Aussparung kann mit dem Gegengewinde einen zweiten Gewindeabschnitt bilden, das in der entgegengesetzten Richtung relative zu dem ersten Gewinde des ersten Gewindeabschnitts angeordnet ist. Das heißt, an der Innenwand des Körpers können zwei gegenläufige Gewindeabschnitte geformt sein, die einander überkreuzt. In der Aussparung kann das überschüssige Metallpulver, das vom additiven Herstellungsverfahren herrührt und am Gewindegang anhaftet, aufgenommen werden. Ein Vorteil dieser Ausführung ist, dass sowohl rechtsgängige als auch linksgängige Schrauben in das Innengewinde geschraubt werden können. Das jeweils andere Gewinde dient dann als Aussparung.

In einer Ausführungsform erstreckt sich die Aussparung im Wesentlichen in Längsrichtung der Öffnung, wobei die Aussparung abschnittsweise in Radialrichtung der Öffnung versetzt ist. Die Aussparung kann eine längliche Form aufweisen, die sich von dem ersten Ende in Richtung des zweiten Endes der Öffnung erstreckt, und die längliche Form kann mehrere Abschnitte umfassen. Jeder Abschnitt der Aussparung kann einen unterschiedlichen Abstand zwischen dem einzelnen Abschnitt der Aussparung und der Längsachse der Öffnung aufweisen, sodass die Aussparung abschnittsweise in Radialrichtung der Öffnung versetzt ist. Auf diese Weise kann die Aussparung den Gewindeabschnitt durchkreuzen und einen Verlauf des Gewindeabschnitts unterbrechen. In der Aussparung kann das überschüssige Metallpulver, das vom additiven Herstellungsverfahren herrührt und am Gewindegang anhaftet, aufgenommen werden.

In einer Ausführungsform variiert eine Basisbreite der Gewindegänge entlang des Gewindes. Alternativ, können die Gewindegänge entlang des Gewindes eine unterschiedliche Höhe besitzen, sodass sich der Flankendurchmesser des Gewindes entlang der Längsachse ändert. Zusätzlich oder alternativ kann eine Gewindesteigung zwischen den einander zugewandten Flanken der zwei benachbarten Gewindegänge entlang des Gewindeabschnitts variieren. Auf diese Weise kann die Aussparung im Gewindeabschnitt integriert geformt sein. In der Aussparung kann das überschüssige Metallpulver, das vom additiven Herstellungsverfahren herrührt und am Gewindegang anhaftet, aufgenommen werden.

Die vorliegende Erfindung umfasst weiterhin ein Verfahren zur Herstellung eines Gewindeelements umfassend oder bestehend aus einem Metall mit einem Innengewinde. Das Gewindeelement umfasst einen Körper, eine Öffnung, die eine Innenwand des Körpers definiert, und einen Gewindeabschnitt. Der Körper umfasst ein erstes Ende und ein zweites Ende. Die Öffnung erstreckt sich zumindest teilweise von dem ersten Ende in Richtung des zweiten Endes des Körpers. Der Gewindeabschnitt ist an der Innenwand der Öffnung geformt und die Innenwand weist zumindest eine Aussparung auf, die den Gewindeabschnitt durchkreuzt. Die Oberfläche des Gewindeabschnitts weist eine Rauigkeit R_{z} im Bereich von 2,5 - 60 µm, insbesondere 10 - 25 µm auf. Das Gewindeelement wird mittels eines additiven Fertigungsverfahrens hergestellt.

In einer Ausführungsform ist das additive Fertigungsverfahren ausgewählt aus der Gruppe bestehend aus, selektivem Laserschmelzen (SLM), selektivem Elektronenstrahlschmelzen (SEBM), Laserauftragschweißen (LMD) und selektivem Lasersintern (SLS).

Auf diese Weise kann ein Gewindeelement mit einem Innengewinde aus amorphen Legierungen und/oder Edelmetallen hergestellt werden. Im Allgemeinen lassen sich die amorphen Legierungen aufgrund ihrer Härte und ihrer hohen elastischen Dehnung schwer bearbeiten, insbesondere bei einem Gewindeschneiden durch Zerspanen. Die amorphen Legierungen zeigen jedoch ausgezeichnete mechanische Eigenschaften, hohe Korrosionsbeständigkeit, isotrope Eigenschaften, hohe magnetische Durchlässigkeit und Biokompatibilität. Daher sind die amorphen Legierungen und/oder Edelmetalle für Hightech-Anwendungen gut geeignet.

Mittels der additiven Fertigung können solche Materialien problemlos zur Herstellung eines komplexen Bauteils eingesetzt werden. Somit kann das Gewindeelement mit dem Innengewinde und Aussparungen durch einen gezielten Schichtauftrag des metallischen Pulvermaterials umfassend oder bestehend aus amorphen Legierungen und/oder Edelmetallen geformt werden. Ein weiterer Vorteil des erfindungsgemäßen Verfahrens ist fehlende Nachbearbeitung des erzeugten Gewindeelements.

In einer Ausführungsform ist die Aussparung gestaltet, um überschüssiges Material aus einem Gewindegang beim Eindrehen einer Schraube aufzunehmen. Auf diese Weise kann das metallische Pulvermaterial, das am erzeugten Gewinde angehaftet, in der Aussparung, die das Gewinde überkreuzt oder schneidet, aufgenommen werden, wenn eine Schraube in das Innengewinde geschraubt wird. Somit kann ein funktionsfähiger Innengewindeabschnitt eines Gewindeelements hergestellt werden, insbesondere, wenn das Gewinde aus einer amorphen Legierung gebildet ist und mittels additiver Fertigungsverfahren hergestellt wurde.

In einer Ausführungsform kann das Verfahren weiterhin die folgenden Schritte umfassen:
- Bereitstellen des metallischen Pulvermaterials durch Schmelzen, Verdüsen und Sieben eines Rohmaterials umfassend oder bestehend aus amorphen Legierungen und/oder Edelmetallen, und
- schichtweise Auftragen des metallischen Pulvermaterials und
- selektives Schmelzen mittels eines additiven Fertigungsverfahrens.

Im additiven Fertigungsverfahren kann das erzeugte Pulvermaterial beispielsweise in einer SLM (Selective Laser Melting) Fertigungsanlage ohne Vorheizung des Pulvers schichtweise aufgetragen werden. Dabei kann eine Laserleistung von 100-200 W mit einer Scangeschwindigkeit von 1500-3000 mm/s verwendet werden. Im Fall von amorphen Legierungen erstarren Schmelzzonen der einzelnen Schichten dabei so schnell, dass eine Kristallisation der geschmolzenen Legierung unterdrückt wird und die Legierung amorph erstarren kann. Die Laserleistung, die Scangeschwindigkeit und der Hatch-Abstand müssen in Abhängigkeit der Schichtdicke, des Pulverkorndurchmessers und der Legierungsart so gewählt werden, dass die Abkühlrate der Schmelze der Legierung unter der kritischen Abkühlrate des jeweiligen Materials liegt. Der Fachmann für additive Fertigung kann diese Parameter ohne erfinderisches Zutun einstellen.

Weitere Merkmale, Vorteile und Anwendungsmöglichkeiten der vorliegenden Erfindung ergeben sich aus der nachfolgenden Beschreibung, den Ausführungsbeispielen und den Figuren. Alle beschriebenen und/oder bildlich dargestellten Merkmale können unabhängig von ihrer Darstellung in einzelnen Ansprüchen, Figuren, Sätzen oder Absätzen miteinander kombiniert werden. In den Figuren stehen gleiche Bezugszeichen für gleiche oder ähnliche Objekte.

### Kurze Beschreibung der Figuren

- Figur 1: zeigt ein Gewindeelement gemäß einer Ausführungsform der vorliegenden Erfindung.
- Figur 2: zeigt eine Draufsicht eines Gewindeelements gemäß einer Ausführungsform der vorliegenden Erfindung.
- Figur 3: zeigt einen schematischen Querschnitt eines Gewindeelements gemäß einer Ausführungsform der vorliegenden Erfindung.
- Figur 4: zeigt einen schematischen Querschnitt eines Gewindeelements gemäß einer Ausführungsform der vorliegenden Erfindung.
- Figur 5: zeigt einen schematischen Querschnitt eines Gewindeelements gemäß einer weiteren Ausführungsform der vorliegenden Erfindung.
- Figur 6a: zeigt einen schematischen Querschnitt eines Gewindeelements gemäß einer weiteren Ausführungsform der vorliegenden Erfindung.
- Figur 6b: zeigt eine Draufsicht eines Gewindeelements gemäß einer weiteren Ausführungsform der vorliegenden Erfindung.
- Figur 7: zeigt einen schematischen Querschnitt eines Gewindeelements gemäß einer weiteren Ausführungsform der vorliegenden Erfindung.
- Figur 8: zeigt einen schematischen Querschnitt eines Gewindeelements gemäß einer weiteren Ausführungsform der vorliegenden Erfindung.
- Figur 9a: zeigt einen schematischen Querschnitt eines Gewindeelements gemäß einer weiteren Ausführungsform der vorliegenden Erfindung.
- Figur 9b: zeigt einen schematischen Querschnitt eines Gewindeelements gemäß einer weiteren Ausführungsform der vorliegenden Erfindung.

### Detaillierte Beschreibung der Ausführungsbeispiele

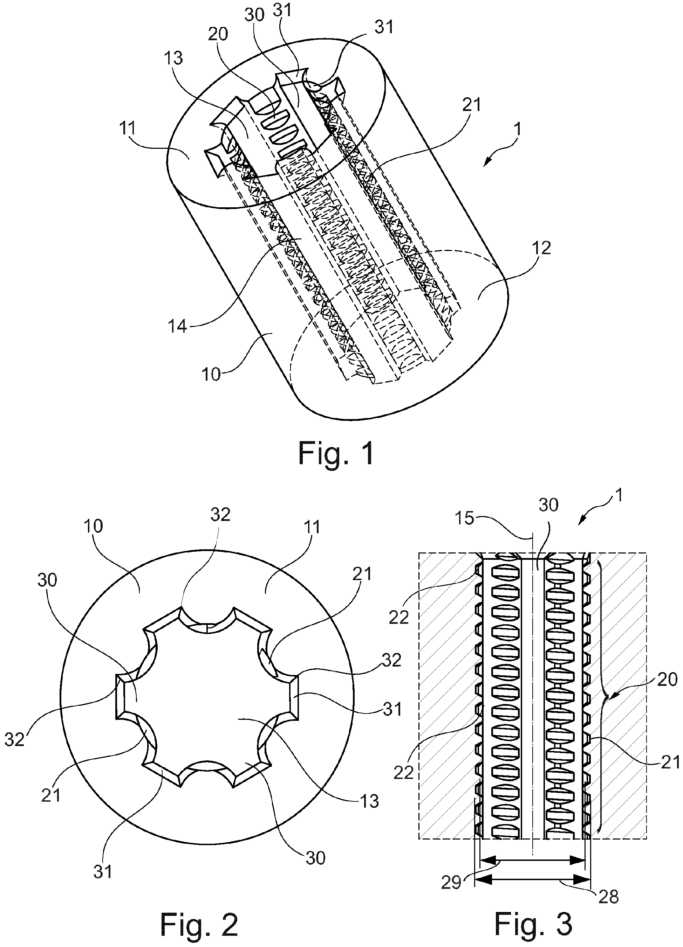

Figur 1 zeigt das erfindungsgemäße Gewindeelement 1 mit einem Innengewinde. Das Gewindeelement 1 umfasst ein Metall oder besteht aus diesem. Das Gewindeelement 1 kann mittels eines additiven Fertigungsverfahrens hergestellt werden. Das Metall ist ausgewählt aus der Gruppe bestehend aus amorphen Legierungen und/oder Edelmetallen. Das additive Fertigungsverfahren ist ausgewählt aus der Gruppe bestehend aus, selektivem Laserschmelzen (SLM), selektivem Elektronenstrahlschmelzen (SEBM), Laserauftragschweißen (LMD) und selektivem Lasersintern (SLS).

Das Gewindeelement 1 umfasst einen Körper 10, eine Öffnung 13, die eine Innenwand 14 des Körpers 10 definiert, und einen Gewindeabschnitt 20. Der Körper 10 umfasst ein erstes Ende 11 und ein zweites Ende 12. Die Öffnung 13 erstreckt sich zumindest teilweise von dem ersten Ende 11 in Richtung des zweiten Endes 12 des Körpers 10.

Der Gewindeabschnitt 20 ist an der Innenwand 14 der Öffnung 13 geformt. Der Gewindeabschnitt 20 umfasst ein Gewinde 21 mit einer Vielzahl von Gewindegängen 22 (siehe auch Figur 3). Auf diese Weise definiert der Gewindeabschnitt 20 das Gewinde 21 des Gewindeelements 1. Eine Oberfläche des Gewindeabschnitts 20 weist eine Rauigkeit R_{z} im Bereich von mindestens 2,5 µm insbesondere 10 µm auf. Eine Oberfläche des Gewindeabschnitts 20 weist eine Rauigkeit R_{z} im Bereich von höchstens 75 µm insbesondere 50 µm und besonders bevorzugt von 25 µm auf. Die Innenwand 14 des Körpers 10 weist zumindest eine Aussparung 30 auf, die den Gewindeabschnitt 20 durchkreuzt. Die Aussparung 30 ist dazu gestaltet, um überschüssiges Material aus dem Bereich zwischen den Gewindegängen 22 während des Hineinschraubens einer Schraube aufzunehmen.

Wie in Figur 2 gezeigt, umfasst die Aussparung 30 und/oder der Gewindeabschnitt 20 eine Fase 31 am ersten Ende 11 und/oder zweiten Ende 12 des Körpers 10. Des Weiteren befindet sich zwischen der Aussparung 30 und dem Gewinde 21 ein Übergangsabschnitt 32. Der Übergangsabschnitt 32 weist typischerweise einen Winkel relativ zu der Aussparung 30 auf, der zwischen 9° und 270° beträgt. Die Innenwand 14 des Körpers 10 weist mehrere Aussparungen 30 auf, die sich zumindest teilweise von dem ersten Ende 11 in Richtung des zweiten Endes 12 der Öffnung 13 erstrecken. Die Aussparungen 30 sind in Umfangsrichtung des Gewindeabschnitts 20 voneinander beabstandet.

Figur 3 zeigt einen Querschnitt des Gewindeelements 1. Das Gewindeelement 1 umfasst den Gewindeabschnitt 20 mit dem Gewinde 21, wobei das Gewinde 21 mehrere Gewindegänge 22 umfasst. Der Gewindeabschnitt 20 erstreckt sich entlang der Längsachse 15 des Körpers 10 oder der Öffnung 13. Das Gewinde 21 weist einen Außendurchmesser 28 und einen Flankendurchmesser 29 auf. Der Außendurchmesser 28 des Gewindes 21 kann beispielsweise mindestens 0,5 mm betragen.

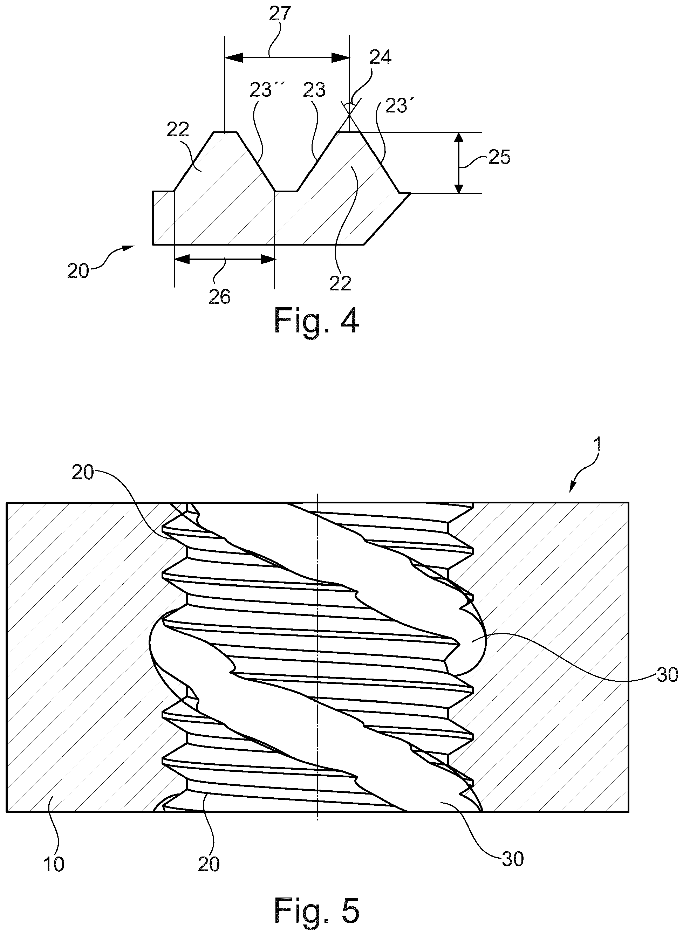

Figur 4 zeigt einen Querschnitt des Gewindeabschnitts 20. Jeder Gewindegang 22 besteht aus zwei Flanken 23, 23', die gemeinsam einen Flankenwinkel 24 definieren. Der Flankenwinkel 24 kann zwischen 10° und 70° liegen. Des Weiteren weist jeder Gewindegang 22 eine Gewindeganghöhe 25 und eine Basisbreite 26. Ferner wird ein Abstand zwischen zwei Gewindegängen als eine Gewindesteigung 27 bezeichnet.

Figur 5 zeigt den Gewindeabschnitt 20 mit der Aussparung 30, die spiralförmig entlang des Gewindeabschnitts 20 geformt ist. Die spiralförmige Aussparung 30 kann entlang der Innenwand 14 des Körpers 10 im Wesentlichen in der gleichen Richtung wie das Gewinde 21 des Gewindeabschnitts 20 angeordnet sein. Die spiralförmige Aussparung 30 kann aber auch entlang der Innenwand 14 des Körpers 10 im Wesentlichen in entgegengesetzter Richtung relativ zu dem Gewinde 21 des Gewindeabschnitts 20 angeordnet sein. Die Aussparung 30 umfasst jedoch in diesem Fall keine Gewindegänge.

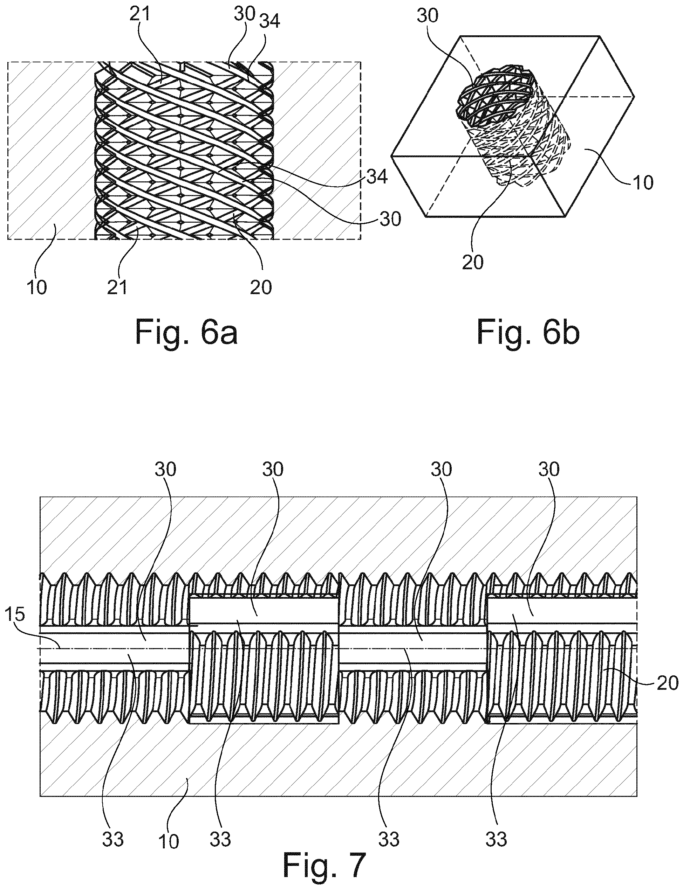

Figur 6a zeigt den Gewindeabschnitt 20 mit der Aussparung 30, die ein Gegengewinde 34 umfasst, das zumindest teilweise in einer entgegensetzten Richtung relativ zum Gewinde 21 des Gewindeabschnitts 20 geformt ist. Figur 6b zeigt das Gewindeelement 1 mit diesem Gewindeabschnitt 20. Das heißt, an der Innenwand 14 des Körpers 10 sind im Gewindeabschnitt 20 zwei gegenläufige Gewinde 21, 34 geformt, die einander kreuzen.

Figur 7 zeigt den Gewindeabschnitt 20 mit der Aussparung 30, die sich im Wesentlichen in Längsrichtung der Öffnung 13 erstreckt und abschnittsweise in Radialrichtung der Öffnung 13 versetzt ist. Die Aussparung 30 weist eine längliche Form auf, die sich von dem ersten Ende 11 in Richtung des zweiten Ende 12 der Öffnung 13 erstreckt, und die längliche Form umfasst mehrere Abschnitte 33. Jeder Abschnitt 33 der Aussparung 30 weist einen unterschiedlichen Abstand zwischen dem einzelnen Abschnitt 33 der Aussparung 30 und der Längsachse 15 der Öffnung 13 auf, sodass die Aussparung 30 abschnittsweise in Radialrichtung der Öffnung 13 versetzt ist.

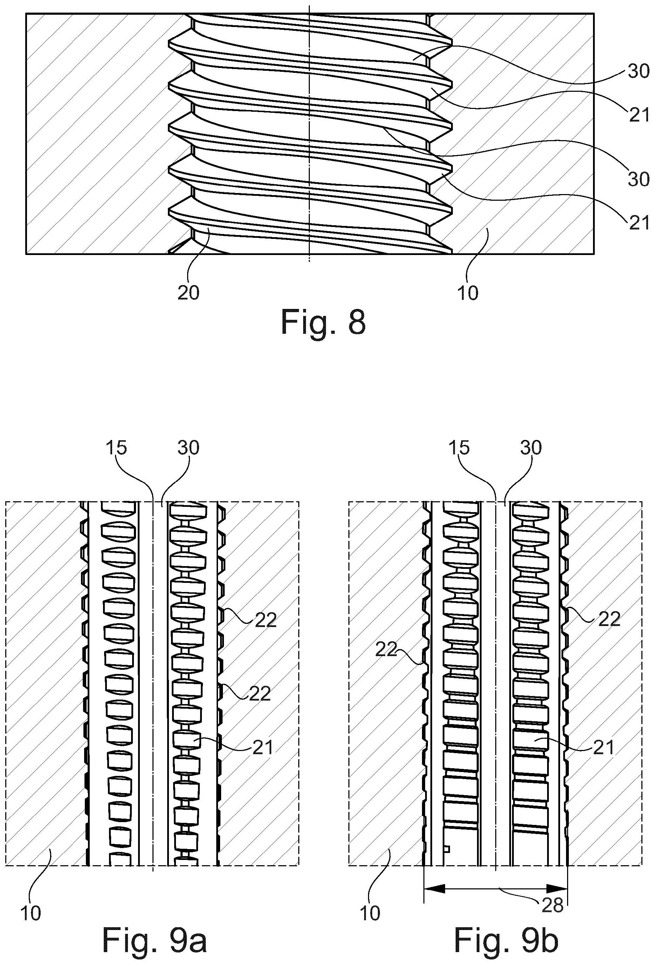

Figur 8 zeigt den Gewindeabschnitt 20 bei dem die Basisbreite 26 des Gewindegangs 22 entlang des Gewindes 21 variiert. Alternativ, können die Gewindegänge 22 entlang des Gewindes 21 eine unterschiedliche Höhe 25 besitzen, sodass sich der Flankendurchmesser 29 des Gewindes 21 entlang der Längsachse 15 oder entlang des Umfangs der Öffnung 13 ändert. Zusätzlich oder alternativ kann die Gewindesteigung 27 zwischen den einander zugewandten Flanken 23, 23"der zwei benachbarten Gewindegänge 22 entlang des Gewindes 21 variieren.

Figur 9a zeigt das Gewinde21, das relativ zu der Längsachse 15 der Öffnung 13 eine konische Form aufweist. Das Gewinde 21 kann somit entlang der Längsachse 15 der Öffnung 13 allmählich verkleinert oder vergrößert werden. Alternativ kann die Gewindeganghöhe 25 entlang der Längsachse 15 abnehmen oder zunehmen, ohne den Außendurchmesser 28 des Gewindes 21 zu ändern (siehe Figur 9b).

Ergänzend sei darauf hingewiesen, dass "umfassend" und "aufweisend" keine anderen Elemente oder Schritte ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Gewindeelement
- 10: Körper
- 11: erstes Ende des Körpers
- 12: zweites Ende des Körpers
- 13: Öffnung
- 14: Innenwand
- 15: Längsachse
- 20: Gewindeabschnitt
- 21: Gewinde
- 22: Gewindegang
- 23, 23', 23": Gewindeflanke
- 24: Flankenwinkel
- 25: Gewindeganghöhe
- 26: Basisbreite
- 27: Gewindesteigung
- 28: Außendurchmesser des Gewindes
- 29: Flankendurchmesser des Gewindes
- 30: Aussparung
- 31: Fase
- 32: Übergangsabschnitt
- 33: Aussparungsabschnitte
- 34: Gegengewinde

## Patentansprüche

1. Ein Gewindeelement (1) umfassend oder bestehend aus einem Metall mit einem Innengewinde, das durch additive Fertigung hergestellt ist, umfassend:
einen Körper (10),
eine Öffnung (13), die eine Innenwand (14) des Körpers (10) definiert, und
einen Gewindeabschnitt (20) mit einem Gewinde (21),
wobei der Körper (10) ein erstes Ende (11) und ein zweites Ende (12) umfasst,
wobei sich die Öffnung (13) zumindest teilweise von dem ersten Ende (11) in Richtung des zweiten Endes (12) des Körpers (10) erstreckt,
wobei der Gewindeabschnitt (20) an der Innenwand (14) der Öffnung (13) geformt ist,
wobei die Innenwand (14) zumindest eine Aussparung (30) aufweist, die den Gewindeabschnitt (20) durchkreuzt, und
wobei eine Oberfläche des Gewindeabschnitts (20) eine Rauigkeit R_{z} im Bereich von 2,5 - 60 µm, insbesondere 10 - 25 µm aufweist.

2. Gewindeelement (1) nach Anspruch 1, wobei ein Außendurchmesser (28) des Gewindes (21) mindestens 0,5 mm beträgt.

3. Gewindeelement (1) nach Anspruch 1, wobei das Metall ausgewählt ist aus der Gruppe bestehend aus amorphen Legierungen und/oder Edelmetallen.

4. Gewindeelement (1) nach einem der vorherigen Ansprüche, wobei die Aussparung (30) und/oder das Gewinde (21) eine Fase (31) am ersten Ende (11) und/oder zweiten Ende (12) des Körpers (10) umfasst.

5. Gewindeelement (1) nach einem der vorherigen Ansprüche, wobei das Gewinde (21) mehrere Gewindegänge (22) umfasst, wobei die Gewindegänge (22) einen Flankenwinkel (24) von 10° bis 70° aufweisen.

6. Gewindeelement (1) nach einem der vorherigen Ansprüche, wobei der Gewindeabschnitt (20) relativ zu der Längsachse (15) der Öffnung (13) eine konische Form aufweist.

7. Gewindeelement (1) nach einem der vorherigen Ansprüche 1 bis 6, wobei die Innenwand (14) des Körpers (10) mehrere Aussparungen (30) aufweist, die sich zumindest teilweise von dem ersten Ende (11) in Richtung des zweiten Endes (12) der Öffnung (13) erstrecken.

8. Gewindeelement (1) nach einem der vorherigen Ansprüche 1 bis 6, wobei die Aussparung (30) spiralförmig entlang des Gewindeabschnitts (20) geformt ist.

9. Gewindeelement (1) nach einem der vorherigen Ansprüche 1 bis 6, wobei die Aussparung (30) ein Gegengewinde (34) umfasst, das zumindest teilweise in einer entgegensetzten Richtung relativ zum Gewinde (21) des Gewindeabschnitts (20) geformt ist.

10. Gewindeelement (1) nach einem der vorherigen Ansprüche 1 bis 6, wobei sich die Aussparung (30) im Wesentlichen in Längsrichtung der Öffnung (13) erstreckt, wobei die Aussparung (30) abschnittsweise in Radialrichtung der Öffnung (13) versetzt ist.

11. Gewindeelement (1) nach einem der vorherigen Ansprüche 1 bis 6, wobei eine Basisbreite (26) der Gewindegänge (22) entlang des Gewindes (21) variiert.

12. Verfahren zur Herstellung eines Gewindeelements (1) umfassend oder bestehend aus einem Metall mit einem Innengewinde nach einem der vorherigen Ansprüche 1 bis 11, wobei das Gewindeelement (1) umfasst
einen Körper (10),
eine Öffnung (13), die eine Innenwand (14) des Körpers (10) definiert, und
einen Gewindeabschnitt (20) mit einem Gewinde (21),
wobei der Körper (10) ein erstes Ende (11) und ein zweites Ende (12) umfasst,
wobei sich die Öffnung (13) zumindest teilweise von dem ersten Ende (11) in Richtung des zweiten Endes (12) des Körpers (10) erstreckt,
wobei der Gewindeabschnitt (20) an der Innenwand (14) des Körpers (10) geformt ist,
wobei die Innenwand (14) zumindest eine Aussparung (30) aufweist, die den Gewindeabschnitt (20) durchkreuzt, und
wobei eine Oberfläche des Gewindeabschnitts (20) eine Rauigkeit R_{z} im Bereich von 2,5 - 60 µm, insbesondere 10 - 25 µm aufweist,
**dadurch gekennzeichnet, dass** das Gewindeelement (1) mittels eines additiven Fertigungsverfahrens hergestellt wird.

13. Verfahren nach Anspruch 12, wobei das additive Fertigungsverfahren ausgewählt ist aus der Gruppe bestehend aus, selektivem Laserschmelzen (SLM), selektivem Elektronenstrahlschmelzen (SEBM), Laserauftragschweißen (LMD) und selektivem Lasersintern (SLS).

14. Verfahren nach Anspruch 12 oder 13, wobei die Aussparung (30) gestaltet ist, um überschüssiges Material aus einem Gewindegang (22) während des Eindrehens einer Schraube aufzunehmen.
